# EUROPEAN PATENT APPLICATION

(11) **EP 2 830 379 A1**
(43) Date of publication of application: **28.01.2015**
(21) Application number: 13765091.7
(22) Date of filing: 21.03.2013
(51) Int. Cl.: H04W 72/04, H04W 8/24

(54) **WIRELESS BASE STATION AND MOBILE STATION**

(30) Priority: 21.03.2012 JP 2012063693
(71) Applicant: NTT DOCOMO, INC., Chiyoda-ku Tokyo 100-6150 (JP)
(72) Inventor: TAKAHASHI, Hideaki, Tokyo 100-6150 (JP); UCHINO, Tooru, Tokyo 100-6150 (JP)
(74) Representative: Hoffmann Eitle
(86) International application number: PCT/JP2013/057958
(87) International publication number: WO 2013/141269

(57) **Abstract**

The present invention uses CA and "TTI bundling" together in an efficient manner. A radio base station (eNB#1) according to the present invention includes a control unit (12) configured such that when a mobile station UE performing CA using PCC and SCC is set to transmit same information across multiple sub-frames in PCC (that is when "TTI bundling" is established), the control unit determines whether or not to delete SCC, based on simultaneous transmission capability information of the mobile station UE.

## Description

### TECHNICAL FIELD

The present invention relates to a radio base station and a mobile station.

### BACKGROUND ART

It is specified that in a mobile communication system of LTE (Long Term Evolution) Release-10, "TTI bundling" cannot be applied when CA (Carrier Aggregation) is performed.

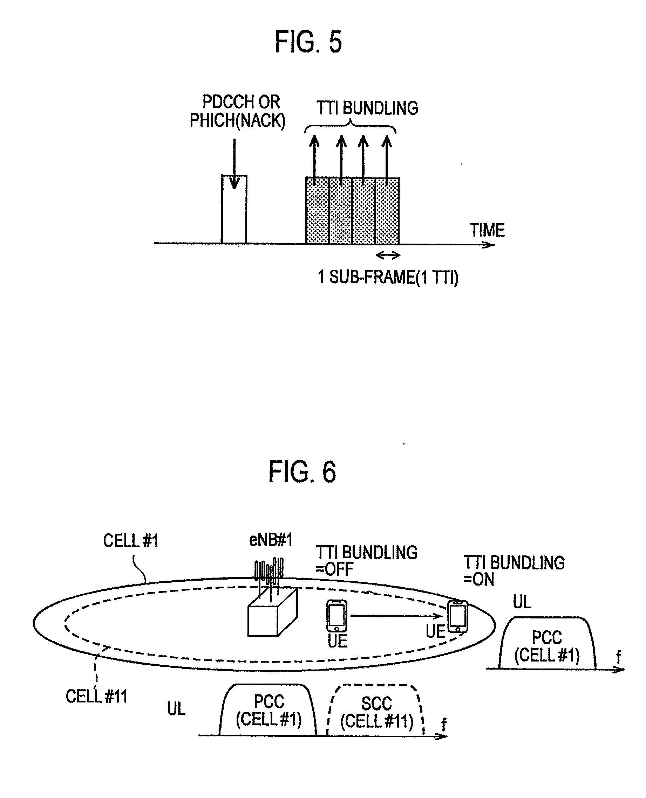

As shown in Fig. 5, when "TTI bundling" is applied, a mobile station UE transmits the same information across multiple sub-frames (for example, four sub-frames).

The LTE Release-10 assumes that when CA is performed in the uplink by using multiple CCs (Component Carrier), the mobile station UE transmits the uplink signal by using multiple CCs in one sub-frame.

For this reason, as shown in Fig. 6, it is a natural way of thinking that in an environment having a significant path loss where "TTI bundling" is applied (around the boundary of a cell #11), SCC (Secondary Carrier) is deleted, and the uplink signal is transmitted via one CC only.

### PRIOR ART DOCUMENT

### NON-PATENT DOCUMENT

Non-patent document 1: 3GPP TS36.300
Non-patent document 2: 3GPP TS36.321

### SUMMARY OF THE INVENTION

However, when the mobile station UE can transmit the uplink signal via one CC only in one sub-frame when performing CA in the uplink, it may be considered that the uplink signal can be transmitted with the CA established at the uplink, by applying "TTI bundling" in a cell having a large path loss, for example, a Pcell (Primary Cell), and not applying "TTI bundling" in a cell having a small path loss, for example, an Scell (Secondary cell).

Here, the Pcell refers to a serving cell in PCC (Primary Carrier), and the Scell refers to a serving cell in SCC.

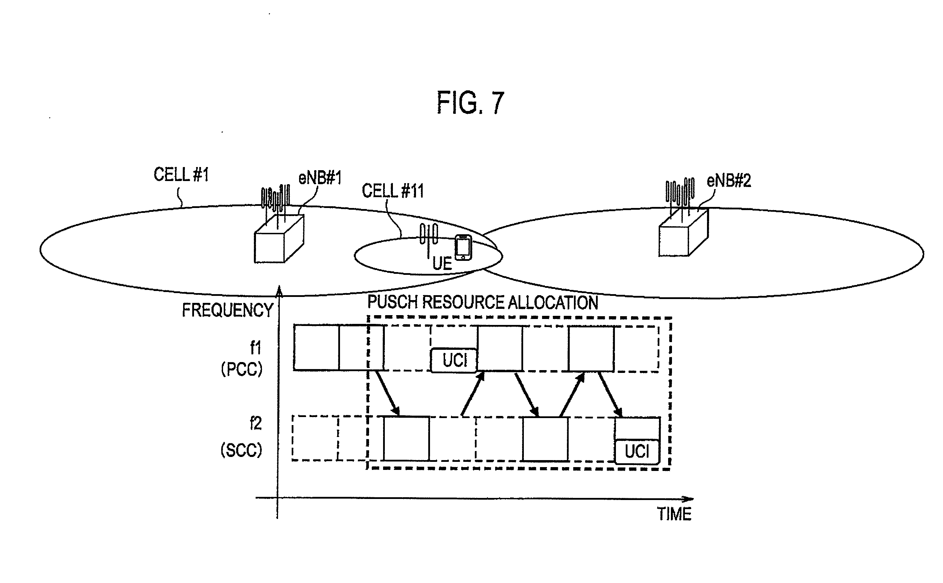

However, in a conventional LTE mobile communication system, when a cell #11 (for example, a picocell) being the Scell is installed within a coverage area of the cell #1 (for example, a macrocell) being the Pcell as shown in Fig. 7, and when "TTI bundling" is applied in the cell #1, the uplink signal cannot be transmitted due to a small path loss in the cell #11 although the mobile station UE can transmit the uplink signal.

In other words, there was a problem that the mobile station UE cannot utilize the cell #11 when "TTI bundling" is applied in the cell #1 although the cell #11 is provided nearby the boundary of the cell #1 to cover the area.

The present invention has been made in view of the above-mentioned problem. An objective of the present invention is to provide a radio base station and a mobile station, that are capable of efficiently using the CA and "TTI bundling" together.

A first feature of the present invention is summarized as a radio base station including a control unit configured such that when a mobile station performing CA by using a primary carrier and a secondary carrier is set to transmit same information across multiple sub-frames in the primary carrier, the control unit determines whether or not to delete the secondary carrier, based on simultaneous transmission capability information of the mobile station.

A second feature of the present invention is summarized as a radio base station including a control unit configured such that when a mobile station has been set to transmit same information across multiple sub-frames, the control unit determines whether or not to cause the mobile station to start CA, based on simultaneous transmission capability information of the mobile station.

A third feature of the present invention is summarized as a mobile station including a transmission unit configured such that when an uplink signal is transmitted only via one component carrier in one sub-frame while performing CA in an uplink, the transmission unit is capable of transmitting same information across multiple sub-frames in a primary carrier, even when the CA is performed by using the primary carrier and a secondary carrier.

### BRIEF DESCRIPTION OF THE DRAWINGS

[Fig. 1] Fig. 1 is a functional block diagram of a radio base station according to a first embodiment of the present invention.
[Fig. 2] Fig. 2 is a functional block diagram of a mobile station according to the first embodiment of the present invention.
[Fig. 3] Fig. 3 is a flow chart showing operations of the radio base station according to the first embodiment of the present invention.
[Fig. 4] Fig. 4 is a flow chart showing operations of the radio base station according to the first embodiment of the present invention.
[Fig. 5] Fig. 5 is a diagram for illustrating a common mobile communication system.
[Fig. 6] Fig. 6 is diagram for illustrating a common mobile communication system.
[Fig. 7] Fig. 7 is a diagram illustrating a common mobile communication system.

### MODE FOR CARRYING OUT THE INVENTION

### [Mobile communication system according to first embodiment of present invention]

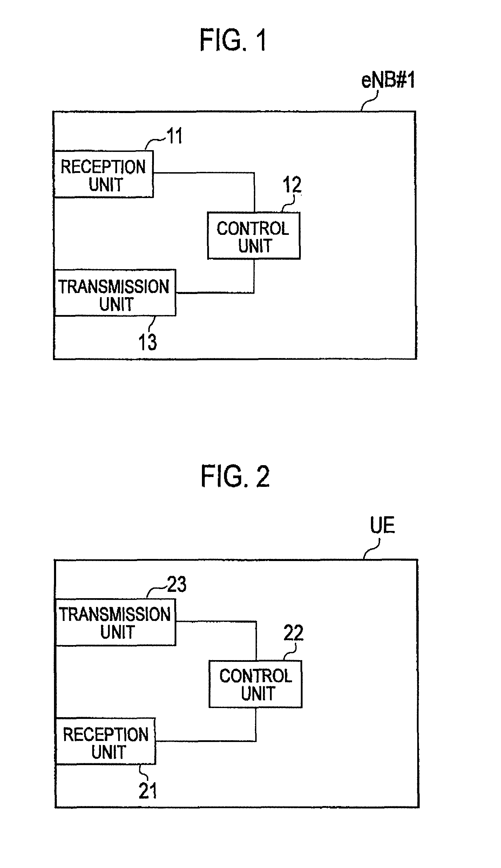

A mobile communication system according to the first embodiment of the present invention will be described with reference to Figs. 1 to 4. The mobile communication system according to this embodiment is a mobile communication system supporting the LTE Advanced.

In the mobile communication system according to this embodiment, a mobile station UE is configured to be capable of transmitting and receiving signals to and from a radio base station eNB#1 by concurrently using a PCC of frequency f1 and a SCC of frequency f2. That is, the mobile station UE is configured to be capable of performing the CA.

As shown in Fig. 7, in the mobile communication system according to this embodiment, a cell #1 and the like are provided as a macrocell, and a cell #11 and the like as a picocell, under control of a radio base station eNB#1.

In the mobile communication system according to this embodiment, a coverage area of the cell #1 and a coverage area of the cell #11 are configured to overlap each other geographically.

In the mobile communication system according to this embodiment, the coverage area of the cell #1 is configured to be wider than the coverage area of the cell #11.

In the mobile communication system according to this embodiment, the mobile station UE can perform CA only in an area where a coverage area of the cell #1 and a coverage area of the cell #11 overlap each other.

As shown in Fig. 1, the radio base station eNB#1 according to this embodiment includes a reception unit 11, a control unit 12, and a transmission unit 13.

The reception unit 11 is configured to receive various signals (uplink signals) transmitted by the mobile station UE. The transmission unit 13 is configured to transmit various signals (downlink signals) to the mobile station UE. The control unit 12 is configured to perform various control processing in the radio base station eNBeNB#1.

For example, the reception unit 11 may be configured to obtain, from the mobile station UE, simultaneous transmission capability information as capability information of the mobile station UE.

Here, the simultaneous transmission capability information may be information indicating whether or not the uplink signal can be transmitted only via one CC in one sub-frame (TTI) when performing the CA in the uplink.

Here, when the simultaneous transmission capability information indicates that the uplink signal can be transmitted only via one CC in one sub-frame (TTI) when performing the CA in the uplink, the mobile station UE may be assumed to have the capability of "1UL CC transmission in a TTI".

Alternatively, the simultaneous transmission capability information may be information indicating whether or not a predetermined communication quality can be ensured only when the uplink signal is transmitted via one CC in a same sub-frame while performing the CA in the uplink.

Here, when the simultaneous transmission capability information indicates that a predetermined communication quality can be ensured when the uplink signal is transmitted via one CC in a same sub-frame while performing the CA in the uplink, the mobile station UE may be assumed to have the capability of "1UL CC transmission in a TTI".

Alternatively, the simultaneous transmission capability information may be information indicating whether or not the uplink signal can be transmitted via multiple CCs within multiple bands in a same sub-frame while performing the CA in the uplink (for example, information indicating whether or not the uplink signal can be transmitted only via one or more CCs operated by the picocell), or information indicating whether or not the uplink signal can be transmitted only via one or more CCs within one band in a same sub-frame while performing the CA in the uplink (for example, information indicating whether or not the uplink signal can be transmitted via all of two or more CCs operated by the macrocell and the picocell).

Here, when the simultaneous transmission capability information indicates that the uplink signal can be transmitted only via one or more CCs within one band in a same sub-frame while performing the CA in the uplink (for example, when the uplink signal can be transmitted only via one or more CCs operated by the picocell), the mobile station UE may be assumed to have the capability of "1UL CC transmission in a TTI".

Alternatively, the simultaneous transmission capability information may be information indicating whether or not a predetermined communication quality can be ensured when the uplink signal is transmitted via multiple carriers within multiple bands in a same sub-frame when performing the CA in the uplink (for example, information indicating whether or not a predetermined communication quality can be ensured when the uplink signal is transmitted via all of two or more CCs operated by the microcell and the picocell), or information indicating whether or not a predetermined communication quality can be ensured only when the uplink signal is transmitted via one or more carriers within one band in a same sub-frame while performing the CA in the uplink (for example, information indicating whether or not a predetermined communication quality can be ensured only when the uplink signal is transmitted only via one or more CCs operated by the picocell).

Here, when the simultaneous transmission capability information indicates that a predetermined communication quality can be ensured only when the uplink signal is transmitted via one or more carriers with one band in a same sub-frame while performing the CA in the uplink (for example, when the simultaneous transmission capability information indicates that a predetermined communication quality can be ensured only when the uplink signal is transmitted only via one or more CCs operated by the picocell), the mobile station UE may be assumed to have the capability of "1UL CC transmission in a TTI".

Alternatively, the simultaneous transmission capability information may be information indicating whether or not the uplink signal can be transmitted via multiple carriers transmitted through multiple antennas in a same sub-frame while performing the CA in the uplink (for example, information indicating whether or not the uplink signal can be transmitted via all of two or more CCs operated by the microcell and the picocell and transmitted through two or more antennas), or information indicating whether or not the uplink signal can be transmitted only via one or more carriers transmitted through one antenna in a same sub-frame while performing the CA in the uplink (for example, information indicating whether or not the uplink signal can be transmitted only via one or more CCs operated by the picocell and transmitted through one antenna).

Here, when the simultaneous transmission capability information indicates that the uplink signal can be transmitted only via one or more carriers transmitted through one antenna in a same sub-frame while performing the CA in the uplink (for example, when the simultaneous transmission capability information indicates that the uplink signal can be transmitted only via one or more CCs operated by the picocell and transmitted through one antenna), the mobile station UE may be assumed to have the capability of "1UL CC transmission in a TTI".

Alternatively, the simultaneous transmission capability information may be information indicating whether or not a predetermined communication quality can be ensured when the uplink signal is transmitted via multiple carriers transmitted through multiple antennas in a same sub-frame while performing the CA in the uplink (for example, information indicating whether or not a predetermined communication quality can be ensured when the uplink signal can be transmitted via all of two or more CCs operated by the microcell and the picocell and transmitted through two or more antennas), or information indicating whether or not a predetermined communication quality can be ensured only when the uplink signal is transmitted via one or more carriers transmitted through one antenna in a same sub-frame while performing the CA in the uplink (for example, information indicating whether or not a predetermined communication quality can be ensured only when the uplink signal is transmitted only via one or more CCs operated by the picocell and transmitted through one antenna).

Here, when the simultaneous transmission capability information indicates that a predetermined communication quality can be ensured only when the uplink signal is transmitted via one or more carriers transmitted through one antenna in a same sub-frame while performing the CA in the uplink (for example, when a predetermined communication quality can be ensured only when the uplink signal is transmitted only via one or more CCs operated by the picocell and transmitted through one antenna), the mobile station UE may be assumed to have the capability of "1UL CC transmission in a TTI".

The control unit 12 may be configured such that when "TTI bundling" in the PCC is established for a mobile station UE performing the CA by using the PCC (Pcell) and the SCC (Scell), the control unit 12 determines whether or not to delete the SCC (Scell), based on simultaneous transmission capability information of the mobile station UE.

For example, the control unit 12 may be configured such that when "TTI bundling" in the PCC is established for a mobile station UE performing the CA by using the PCC (Pcell) and the SCC (Scell), the control unit 12 determines not to delete SCC (Scell), when the mobile station UE can transmit the uplink signal only via one CC in one sub-frame (TTI) when performing the CA in the uplink.

Meanwhile, the control unit 12 may be configured such that when "TTI bundling" in the PCC is established for a mobile station UE performing the CA by using the PCC (Pcell) and the SCC (Scell), the control unit 12 determines to delete the SCC (Scell), when the mobile station UE can transmit the uplink signal via all of two or more established CCs in one sub-frame (TTI) while performing the CA in the uplink.

Alternatively, the control unit 12 may be configured such that when "TTI bundling" in the PCC is established for a mobile station UE performing the CA by using the PCC (Pcell) and the SCC (Scell), the control unit 12 determines not to delete the SCC (Scell), when the mobile station UE can transmit the uplink signal only via one or more CCs operated by the picocell in one sub-frame (TTI) while performing the CA in the uplink.

Meanwhile, the control unit 12 may be configured such that when "TTI bundling" in the PCC is established for a mobile station UE performing the CA by using the PCC (Pcell) and the SCC (Scell), the control unit 12 determines to delete the SCC (Scell), when the mobile station UE can transmit the uplink signal via all of two or more CCs operated by the microcell and the picocell in one sub-frame (TTI) while performing the CA in the uplink.

Alternatively, the control unit 12 may be configured such that when "TTI bundling" in the PCC is established for a mobile station UE performing the CA by using the PCC (Pcell) and the SCC (Scell), the control unit 12 determines not to delete the SCC (Scell), when the mobile station UE can transmit the uplink signal only via one or more CCs operated by the picocell and transmitted through one antenna in one sub-frame (TTI) while performing the CA in the uplink.

Meanwhile, the control unit 12 may be configured such that when "TTI bundling" in the PCC is established for a mobile station UE performing the CA by using the PCC (Pcell) and the SCC (Scell), the control unit 12 determines to delete the SCC (Scell), when the mobile station UE can transmit the uplink signal via all of two or more CCs operated by the macrocell and the picocell and transmitted through two or more antennas in one sub-frame (TTI) while performing the CA in the uplink.

The control unit 12 may be configured such that when "TTI bundling" has been established for the mobile station UE, the control unit 12 determines whether or not to cause the mobile station UE to start the CA, based on the simultaneous transmission capability information of the mobile station UE.

For example, the control unit 12 may be configured such that when "TTI bundling" has been established for the mobile station UE, the control unit 12 determines to cause the mobile station UE to start the CA (that is, to establish the Scell), when the mobile station UE can transmit the uplink signal only via one CC in one sub-frame (TTI) while performing the CA in the uplink.

Meanwhile, the control unit 12 may be configured such that when "TTI bundling" has been established for the mobile station UE, the control unit 12 determines not to cause the mobile station UE to start the CA (that is, not to establish the SCC), when the mobile station UE can transmit the uplink signal via all of two or more established CCs in one sub-frame (TTI) while performing the CA in the uplink.

Alternatively, the control unit 12 may be configured such that when "TTI bundling" has been established for the mobile station UE, the control unit 12 determines to cause the mobile station UE to start the CA (that is, to establish the Scell), when the mobile station UE can transmit the uplink signal only via one or more CCs operated by the picocell in one sub-frame (TTI) while performing the CA in the uplink.

Meanwhile, the control unit 12 may be configured such that when "TTI bundling" has been established for the mobile station UE, the control unit 12 determines to cause the mobile station UE not to start the CA (that is, not to establish the Scell), when the mobile station UE can transmit the uplink signal via all of two or more CCs operated by the macrocell and the picocell in one sub-frame (TTI) while performing the CA in the uplink.

Alternatively, the control unit 12 may be configured such that when "TTI bundling" has been established for the mobile station UE, the control unit 12 determines to cause the mobile station UE to start the CA (that is, to establish the Scell), when the mobile station UE can transmit the uplink signal only via one or more CCs operated by the picocell and transmitted through one antenna in one sub-frame (TTI) while performing the CA in the uplink.

Meanwhile, the control unit 12 may be configured such that when "TTI bundling" has been established for the mobile station UE, the control unit 12 determines to cause the mobile station UE not to start the CA (that is, not to establish the Scell), when the mobile station UE can transmit the uplink signal via all of two or more CCs operated by the macrocell and the picocell and transmitted through two or more antennas in one sub-frame (TTI) while performing the CA in the uplink.

The transmission unit 13 is configured to instruct the mobile station UE by using RRC (Radio Resource Control) signaling, etc. to establish "TTI bundling" and start the CA.

As shown in Fig. 2, the mobile station UE according to this embodiment includes a reception unit 21, a control unit 22, and a transmission unit 23.

The reception unit 21 is configured to receive various signals (downlink signals) transmitted by the radio base station eNB#1. The transmission unit 23 is configured to transmit various signals (uplink signals) to the radio base station eNB#1. The control unit 22 is configured to perform various control processing in the mobile station UE.

For example, the reception unit 21 is configured to receive "TTI bundling" establishment instruction, CA start instruction, and the like via RRC signaling, etc.

The control unit 22 is configured to perform "TTI bundling" and CA based on the above-mentioned RRC signaling, etc.

The transmission unit 23 is configured to transmit the above-mentioned simultaneous transmission capability information to the radio base station eNB#1.

The transmission unit 23 may be configured such that when the uplink signal is transmitted only via one CC in one sub-frame while performing the CA in the uplink, the transmission unit 23 transmits same information across multiple sub-frames in the PCC (Pcell) even when the CA is performed by using the PCC (Pcell) and the SCC (Scell).

Alternatively, the transmission unit 23 may be configured such that when the uplink signal is transmitted only via one or more CCs within one band in one sub-frame while performing the CA in the uplink, the transmission unit 23 is capable of transmitting same information across multiple sub-frames in the PCC (Pcell) even when the CA is performed by using the PCC (Pcell) and the SCC (Scell).

Alternatively, the transmission unit 23 may be configured such that when the uplink signal is transmitted only via one or more CCs transmitted through one antenna in one sub-frame while performing the CA in the uplink, the transmission unit 23 is capable of transmitting same information across multiple sub-frames in the PCC (Pcell) even when the CA is performed by using the PCC (Pcell) and the SCC (Scell).

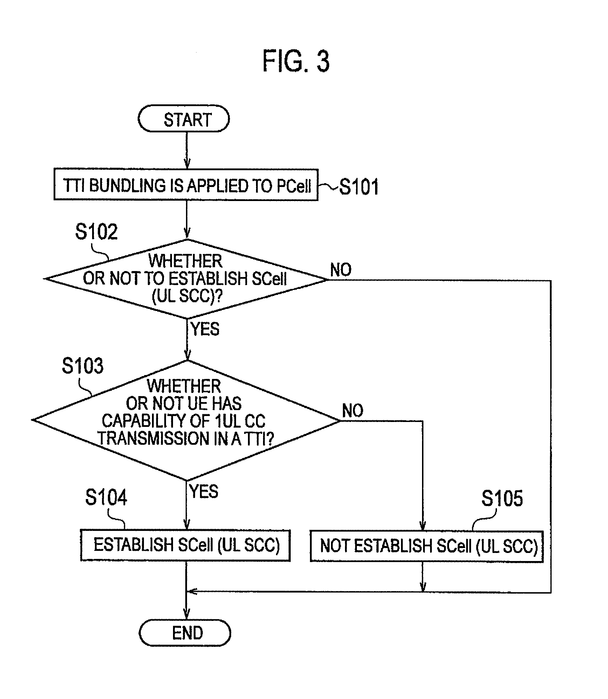

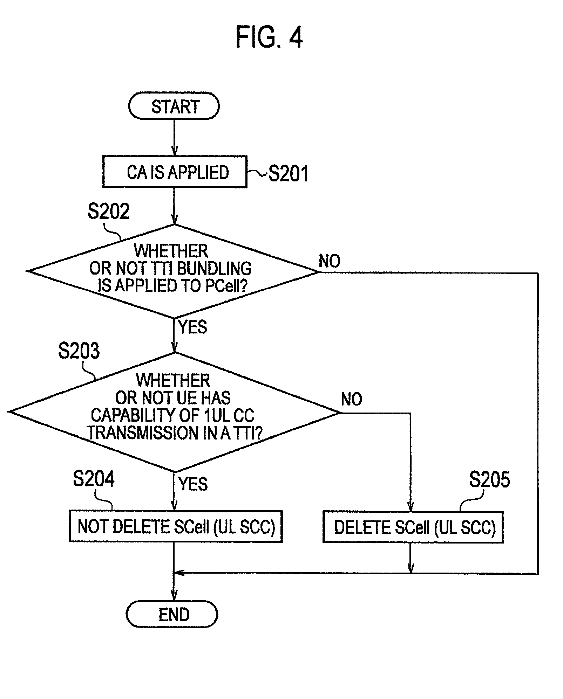

Hereinafter, operations of the mobile communication system according to this embodiment, specifically, operations of the radio base station eNB#1 according to this embodiment will be described with reference to Fig. 3 and Fig. 4.

First, referring to Fig. 3, an operation example 1 of the radio base station eNB#1 according to this embodiment will be described.

As shown in Fig. 3, when "TTI bundling" is applied in the Pcell of the mobile station UE in step S101, the radio base station eNB#1 determines in step S102 whether or not to establish the Scell.

If determined "Yes", the process proceeds to step S103. If determined "No", the process ends.

In step S103, the radio base station eNB#1 determines whether the mobile station UE has the capability of "1UL CC transmission in a TTI".

If determined "Yes", the process proceeds to step S104. If determined "No", the process proceeds to step S105.

In step S104, the radio base station eNB#1 establishes the Scell for the mobile station UE.

In step S105, the radio base station eNB#1 does not establish the Scell for the mobile station UE.

Secondary, an operation example 2 of the radio base station eNB#1 according to this embodiment will be described with reference to Fig. 4.

As shown in Fig. 4, when the CA is established for the mobile station UE at step S201, the radio base station eNB#1 determines at step S202 whether or not to apply "TTI bundling" to the Pcell of the mobile station UE.

If determined "Yes", the process proceeds to step S203. If determined "No", the process ends.

In step S203, the radio base station eNB#1 determines whether or not the mobile station UE has the capability of "1UL CC transmission in a TTI".

If determined "Yes", the process proceeds to step S204. If determined "No", the process proceeds to step S205.

In step S204, the radio base station eNB#1 does not delete the Scell of the mobile station UE.

In step S205, the radio base station eNB#1 deletes the Scell of the mobile station UE.

In the mobile communication system according to the first embodiment of the present invention, when the cell #11 (picocell) is provided within a coverage area of the cell #1 (macrocell), the mobile station UE having the capability of "1UL CC transmission in a TTI" can transmit the uplink signal in the cell #11 even when "TTI bundling" is applied nearby the boundary of the cell #1.

The features of the above-described embodiment may also be expressed as follows.

A first feature of this embodiment is summarized as a radio base station eNB#1 including a control unit 12 configured such that when a mobile station UE performing CA by using a PCC (a primary carrier) and a SCC (a secondary carrier) is set to transmit same information across multiple sub-frames (TTIs) in the PCC, the control unit 12 determines whether or not to delete the SCC, based on simultaneous transmission capability information of the mobile station UE.

A second feature of this embodiment is summarized as a radio base station eNB including a control unit 12 configured such that when a mobile station UE has been set to transmit same information across multiple sub-frames (that is, when "TTI bundling" is established), the control unit 12 determines whether or not to cause the mobile station UE to start CA, based on simultaneous transmission capability information of the mobile station UE.

A third feature of this embodiment is summarized as a mobile station UE including a transmission unit 23 configured such that when an uplink signal is transmitted only via one CC (component carrier) in one sub-frame while performing CA in an uplink, the transmission unit 23 is capable of transmitting same information across multiple sub-frames in a PCC, even when the CA is performed by using the PCC and a SCC.

It should be noted that the foregoing operations of the mobile station UE and the radio base station eNB may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and the radio base station eNB. Otherwise, the storage medium and the processor may be provided as discrete components inside the mobile station UE and the radio base station eNB.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2012-063693 (filed on March 21, 2012) is incorporated by reference in the present specification.

### INDUSTRIAL APPLICABILITY

As described above, the present invention provides a radio base station and a mobile station, that are capable of using the CA and "TTI bundling" together in an efficient manner.

### EXPLANATION OF THE REFERENCE NUMERALS

- UE: mobile station
- eNB#1, eNB#2: radio base station
- 11, 21: reception unit
- 12, 22: control unit
- 13, 23: transmission unit

## Claims

1. A radio base station comprising a control unit configured such that when a mobile station performing CA (Carrier Aggregation) by using a primary carrier and a secondary carrier is set to transmit same information across a plurality of sub-frames in the primary carrier, the control unit determines whether or not to delete the secondary carrier, based on simultaneous transmission capability information of the mobile station.

2. A radio base station comprising a control unit configured such that when a mobile station has been set to transmit same information across a plurality of sub-frames, the control unit determines whether or not to cause the mobile station to start CA (Carrier Aggregation), based on simultaneous transmission capability information of the mobile station.

3. A mobile station comprising a transmission unit configured such that when an uplink signal is transmitted only via one component carrier in one sub-frame while performing CA (Carrier Aggregation) in an uplink, the transmission unit is capable of transmitting same information across a plurality of sub-frames in a primary carrier, even when the CA is performed by using the primary carrier and a secondary carrier.
